(19) Europäisches Patentamt
European Patent Office
Office européen des brevets

(11) **EP 1 209 053 B1**

(12) **FASCICULE DE BREVET EUROPEEN**

(45) Date de publication et mention de la délivrance du brevet:
**09.03.2011   Bulletin 2011/10**

(51) Int Cl.:
***B60T 8/17*** *(2006.01)*

(21) Numéro de dépôt: **01403009.2**

(22) Date de dépôt: **23.11.2001**

(54) **Procédé d'assistance d'un véhicule en freinage asymétrique**

Unterstützungsverfahren eines Kraftfahrzeugs während einer Splitbremsung

Active drive assist method for motor vehicle in case of a split-mu braking

(84) Etats contractants désignés:
**BE DE GB**

(30) Priorité:  **24.11.2000   FR 0015206**

(43) Date de publication de la demande:
**29.05.2002   Bulletin 2002/22**

(73) Titulaire: **RENAULT S.A.S.**
**92100 Boulogne Billancourt (FR)**

(72) Inventeurs:
 • **Auvinet, Jannick**
   **27000 Evreux (FR)**
 • **Berthoud, Yann**
   **94300 Vincennes (FR)**
 • **Guegan, Stéphane**
   **75002 Paris (FR)**
 • **Richard, Arnaud**
   **92150 Suresnes (FR)**

(56) Documents cités:
   EP-A- 0 476 373      DE-A- 4 419 131
   DE-A- 19 751 227     US-A- 5 089 967

**Description**

L'invention concerne un procédé d'assistance d'un véhicule automobile, lors de freinage sur adhérence asymétrique, par commande de la direction assistée électrique.

L'adhérence caractérise l'intensité des forces de frottement s'exerçant sur un pneu pendant le glissement de la roue sur le sol. Le coefficient d'adhérence $\mu$ est le rapport entre la force de freinage, générée à l'interface du pneu et de la route, et la force verticale subie par le pneu. Une surface à haute adhérence, telle que l'asphalte sec, permet un bon freinage, alors qu'une surface à faible adhérence pénalise le freinage, telle qu'une route verglacée. On parle d'adhérence asymétrique lorsque les roues d'un côté du véhicule sont sur une surface à haute adhérence alors que les roues de l'autre côté sont sur une surface à faible adhérence, ce qui peut se produire en cas de sortie de route d'un côté du véhicule ou en cas de passage sur une plaque de verglas. Les forces de frottement, qui freinent le véhicule, le déséquilibrent en créant un moment de lacet pouvant provoquer un tête à queue. Le conducteur doit donc tourner le volant jusqu'à ce que les forces de guidage à l'avant, engendrées par l'angle de braquage, compensent ce moment de lacet perturbateur.

Le principal système actuel de stabilisation du véhicule en cours de freinage est l'A.B.S. - Anti-Blocking System -, qui augmente au maximum le freinage sur chaque roue en situation ordinaire et qui, en situation d'adhérence asymétrique, peut limiter la différence de pression entre les freins d'un même essieu. Il diminue ainsi le freinage du côté le moins adhérent pour éviter l'apparition d'un moment de lacet trop important et donc pour améliorer la stabilité du véhicule qui va maintenir sa trajectoire, mais la distance de freinage est augmentée. Pour ne pas surprendre le conducteur qui ne se doute pas de l'apparition du moment de lacet, la différence de pression entre les freins des deux côtés du véhicule est établie progressivement. Grâce à cette temporisation du moment de lacet, le conducteur prend conscience de la situation et a alors le temps de réagir en braquant son volant pour compenser le moment de lacet perturbateur. Cependant, cette différence de pression reste relativement limitée, car si la différence de pression est faible, la distance d'arrêt du véhicule est allongée, et si elle est élevée, le conducteur est très sollicité et peut avoir des difficultés à maintenir le véhicule sur sa trajectoire. De plus, pendant la phase de temporisation, le freinage n'est pas optimal car la différence de pression de freinage est très limitée.

Le brevet américain US 5 224 766, déposé au nom de TOKICO, concernant un dispositif d'anti-patinage de véhicule, propose de diminuer la pression de freinage sur les deux roues arrière, après avoir détecté une situation d'adhérence asymétrique. Cette solution a pour but d'assurer un meilleur guidage latéral des roues arrière, qui s'oppose au glissement du véhicule ayant tendance à partir en tête à queue lors d'un freinage sur adhérence asymétrique, mais elle a l'inconvénient d'accroître la distance d'arrêt.

Le brevet américain US 4 998 593, déposé au nom de AISIN SEIKI, apporte une solution au problème dans le cas d'un véhicule avec une direction sans colonne « steer by wire », en braquant les roues pour que le véhicule suive la trajectoire désirée par le conducteur. En effet, avec une direction sans colonne, le volant n'est pas lié mécaniquement aux roues, de sorte que la correction de braquage apportée par le système ne modifie pas l'angle du volant. La trajectoire souhaitée par le conducteur est estimée à partir de l'angle du volant. Mais cette solution n'est nullement applicable à une direction assistée électrique dans laquelle l'angle du volant et l'angle de braquage des roues sont mécaniquement liés : il est impossible de dissocier, dans la mesure de l'angle volant, ce qui est dû à l'action du conducteur sur le volant de ce qui est dû au braquage du système correcteur.

Un procédé de stabilisation d'un véhicule sur adhérence asymétrique selon le préambule de la revendication 1 est connu de DE 19751227.

Le but de la présente invention est de pallier ces inconvénients en proposant d'utiliser la direction assistée électrique, en particulier son moteur électrique commandable, pour stabiliser le véhicule en situation de freinage sur adhérence asymétrique. Le procédé d'assistance au freinage va autoriser de plus grandes différences de pression de freinage entre les roues gauche et droite du véhicule, commandées par le système ABS, dans le but de raccourcir la distance de freinage par rapport aux solutions antérieures, mais en compensant le moment de lacet perturbateur ainsi créé par pilotage du moteur de la direction assistée électrique.

Pour cela, le moment de lacet perturbateur est estimé à partir des mesures délivrées par les capteurs de vitesse de roues, un accéléromètre transversal et les capteurs de pression de pneus, utilisés par la direction DAE et le système ABS équipant le véhicule. Puis, un angle de correction de braquage des roues directrices est calculé pour compenser ledit moment de lacet et maintenir le véhicule sur sa trajectoire. Enfin, le moteur de la direction assistée électrique est commandé pour que le conducteur ressente, au niveau du volant, un couple de rappel vers cet angle de correction et l'inciter à tourner le volant de façon à compenser ce moment de lacet, pendant que le système ABS commande un freinage individuel optimisé sur chaque roue.

L'objet de l'invention est un procédé d'assistance d'un véhicule automobile lors d'un freinage sur adhérence asymétrique, le véhicule étant équipé d'une direction assistée électrique et d'un système de freinage avec anti-blocage des roues ABS, utilisant des capteurs de mesure de l'accélération latérale du véhicule, des quatre vitesses de roues, des quatre pressions de freinage, de la vitesse de lacet et de l'angle du volant, le système de freinage avec anti-blocage des roues commandent un freinage individuel optimisé sur chaque roue et différent sur les deux roues d'un même essieu et la direction assistée électrique compensant automatiquement le moment de lacet perturbateur créé par cette différence de pression de freinage.

Selon l'invention, ce procédé d'assistance au freinage comporte les étapes suivantes :

- $e_1$) acquisition des mesures réalisées par des capteurs, puis traitées par filtrage pour éliminer le bruit ;
- $e_2$) estimation du moment M de lacet perturbateur, créé par les forces longitudinales de freinage subies par les roues sur adhérence asymétrique, à partir des vitesses des roues $\omega_{ij}$ des pressions de freinage $P_{ij}$ et de l'angle du volant $\alpha_v$ ;
- $e_3$) calcul d'un angle de correction de braquage $\alpha_{cor}$ pour créer un moment s'opposant au moment de lacet M estimé à l'étape précédente, par annulation de l'accélération de lacet $\ddot{\psi}$ à partir des raideurs de dérive, de l'accélération transversale $\gamma_t$, de la vitesse de lacet $\dot{\psi}$ et de la vitesse du véhicule V ;
- $e_4$) calcul d'un couple $C_{cons}$ de consigne de rappel du volant vers la position de correction de braquage, à partir de cet angle calculé et de la mesure de l'angle au volant ;
- $e_5$) asservissement du couple $C_{mes}$ mesuré entre le volant et la colonne de direction vers le couple de consigne calculé précédemment, par commande en courant du moteur de la direction assistée électrique.

D'autres caractéristiques et avantages de l'invention apparaîtront à la lecture de la description d'un exemple de mise en oeuvre du procédé d'assistance, illustrée par les figures suivantes qui sont:

- la figure 1 : les différentes étapes du procédé d'assistance au freinage selon l'invention ;
- la figure 2 : la représentation schématique des efforts sur les pneus contribuant à un moment de lacet ;
- la figure 3 : la représentation schématique d'un modèle de véhicule dit deux roues ;
- la figure 4 : une représentation schématique d'une direction assistée électrique de véhicule automobile ;
- la figure 5: les étapes de la commande de la direction assistée électrique selon l'invention ;
- la figure 6 : un exemple de correcteur par synthèse H infini ;
- la figure 7 : les étapes de l'asservissement du moteur de la direction assistée ;
- la figure 8: les différentes étapes du procédé d'assistance au freinage, selon une variante de l'invention.

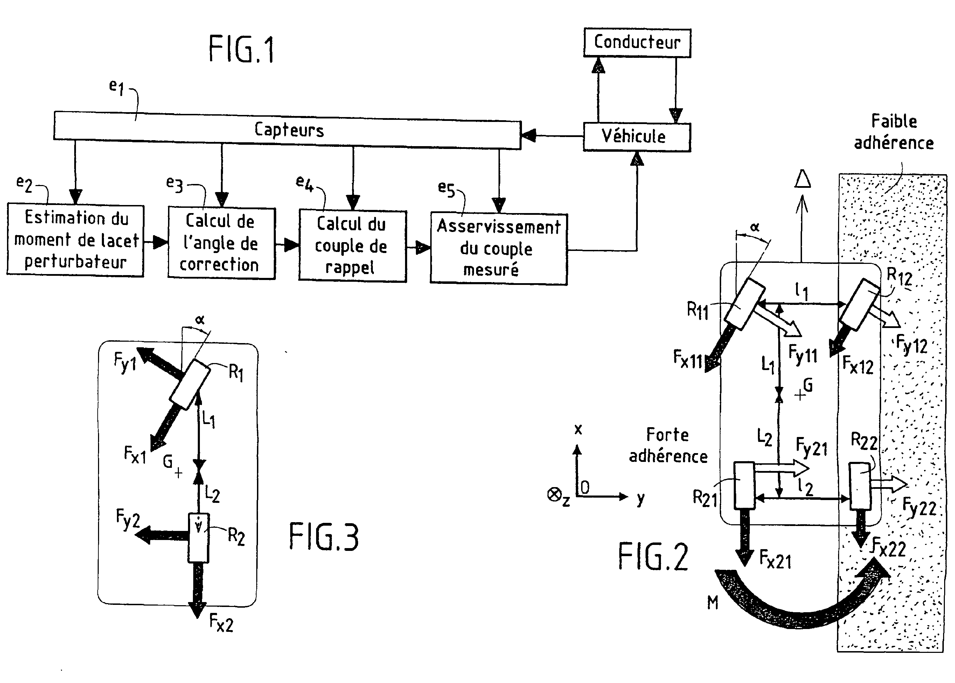

Pour un véhicule équipé d'une direction assistée électrique DAE et d'un système de freinage avec anti-blocage des roues ABS, avec des capteurs de mesure de l'accélération latérale du véhicule, des quatre vitesses de roues, des quatre pressions de freinage, de la vitesse de lacet et de l'angle du volant, le procédé d'assistance, en situation de freinage sur adhérence asymétrique, comporte les étapes suivantes, comme le montre schématiquement la figure 1 :

- une étape $e_1$) d'acquisition des mesures réalisées par des capteurs, puis traitées par filtrage pour éliminer le bruit ;
- une étape $e_2$) d'estimation du moment de lacet perturbateur, créé par le freinage sur adhérence asymétrique commandé par le système ABS, à partir des vitesses des roues, des pressions de freinage et de l'angle du volant ;
- une étape $e_3$) de calcul d'un angle de correction de braquage pour créer un moment s'opposant au moment de lacet estimé à l'étape précédente, à partir des raideurs de dérive, de l'accélération transversale, de la vitesse de lacet et de la vitesse du véhicule ;
- une étape $e_4$) de calcul d'un couple de consigne de rappel du volant vers la position de correction de braquage, à partir de cet angle calculé et de la mesure de l'angle au volant ;
- une étape $e_5$) d'asservissement du couple mesuré entre le volant et la colonne de direction vers le couple de consigne calculé précédemment, par commande en courant du moteur de la direction assistée électrique.

L'étape $e_1$) réalise l'acquisition et le traitement des mesures suivantes, délivrées par les capteurs :

- les vitesses de rotation $\omega_{ij}$ des roues $R_{ij}$, l'indice i étant égal à 1 pour les deux roues avant et égal à 2 pour les deux roues arrière et l'indice j étant égal à 1 pour le côté gauche du véhicule et égal à 2 pour le côté droit ;
- les pressions de freinage $P_{ij}$ pour les quatre roues $R_{ij}$ ;
- l'angle au volant $\alpha_v$ ;
- l'accélération transversale $\gamma_t$ du véhicule ;
- la vitesse de lacet $\dot{\Psi}$ ;
- le couple au volant $C_v$.

Comme le montre la représentation schématique de la figure 2, les pneus des roues $R_{ij}$ subissent chacun de

la part du sol, une force $F_{xij}$ longitudinale et une force $F_{yij}$ latérale. L'angle que les roues directrices $R_{11}$ et $R_{12}$ font avec l'axe longitudinal $\Delta$ du véhicule est appelé $\alpha$, la distance entre le centre de gravité G et le train des roues avant $R_{1j}$, respectivement des roues arrière $R_{2j}$, est appelée $L_1$, respectivement $L_2$, et la longueur de l'essieu avant, respectivement arrière, est nommée $I_1$, respectivement $I_2$.

Sur la figure 2, les roues avant et arrière droite $R_{12}$ et $R_{22}$ circulent sur une zone de faible adhérence par rapport aux deux autres roues du véhicule. Dans le repère orthonormé (0, x, y, z) dans lequel l'axe horizontal Ox est parallèle à l'axe $\Delta$ du véhicule, l'axe horizontal Oy est perpendiculaire à Ox et l'axe Oz est vertical, l'équation de dynamique angulaire selon l'axe vertical s'écrit :

$$(E_1) \quad I_z \cdot \ddot{\Psi} = \left(F_{x11} - F_{x12}\right)\frac{l_1}{2} \cdot \cos\alpha + \left(F_{x21} - F_{x22}\right)\frac{l_2}{2} + \left(F_{y11} - F_{y12}\right)\frac{l_1}{2} \cdot \sin\alpha$$
$$+ \left(F_{x11} + F_{x12}\right)L_1 \cdot \sin\alpha - \left(F_{y11} + F_{y12}\right)L_1 + \left(F_{y21} + F_{y22}\right)L_2 \cdot \cos\alpha$$

Les trois premiers termes de la somme représentent le moment de lacet perturbateur dû au freinage par le système ABS sur un sol présentant une asymétrie de l'adhérence. Dans cette expression du moment, le terme $\left(F_{y11} - F_{y12}\right)\frac{l_1}{2} \cdot \sin\alpha$ est très inférieur aux autres car la force latérale $F_{yij}$ est très inférieure à la force longitudinale $F_{xij}$ en phase de freinage et l'angle de braquage des roues $\alpha$ est petit, donc $\sin\alpha$ est inférieur à 0,2.

Le moment de lacet estimé s'exprime alors :

$$(E_2) \quad M = \left(F_{x11} - F_{x12}\right)\frac{l_1}{2}\cos\alpha + \frac{l_2}{2}\left(F_{x21} - F_{x22}\right)$$

En faisant le bilan des moments des forces qui s'exercent sur chaque roue et en négligeant les forces de Coriolis, l'équation de la dynamique angulaire de chaque roue motrice $R_{11}$ et $R_{12}$ , de rayon de roulement R, est :

$$(E_3) \quad I_{1j} \cdot \dot{\omega}_{ij} = R \cdot F_{x1j} - C_{F1j} + C_{D1j}$$

et celle de chaque roue menée :

$$(E_4) \quad I_{2j} \cdot \dot{\omega}_{ij} = R \cdot F_{x2j} - C_{21j} + C_{F2j}$$

avec $C_{Dij}$ : le couple transmis à la roue par le différentiel ;
et $C_{Fij}$ : le couple de freinage exercé par les plaquettes de frein sur le disque de chaque roue et donné par l'équation suivante :

$$(E_5) \quad C_{Fij} = 2\mu \cdot \phi \cdot R_e \cdot P_{ij}$$

dans laquelle $P_{ij}$ est la pression du liquide de frein, $\mu$ est un coefficient d'adhérence variant selon la température, $\phi$ est la surface du piston et $R_e$ le rayon efficace de la plaquette, c'est-à-dire la distance moyenne du centre à la zone d'application des plaquettes sur le disque.

En négligeant l'inertie des roues par rapport aux efforts de freinage, les équations $(E_3)$ et $(E_4)$ s'annulent et le moment de lacet perturbateur M s'exprime, à partir des mesures de pression de freinage, commandées par le système ABS, selon l'équation suivante :

$$(E_6) \qquad M = \frac{1}{2R}\left[l_2(C_{F21}-C_{F22})+l_1(C_{F11}-C_{F12})\cos\alpha\right]$$

Pour que le véhicule garde sa trajectoire malgré ce moment de lacet, c'est-à-dire que la vitesse de lacet $\dot{\Psi}$ reste constante pendant le freinage exercé par le système ABS, l'invention propose de créer un couple de lacet qui s'oppose à ce moment perturbateur M. A cet effet, la direction doit tourner le volant d'un angle de correction $\alpha_{cor}$ qui annule l'accélération de lacet $\ddot{\Psi}$. En reprenant l'équation de dynamique angulaire (E$_1$) :

$$I_z \cdot \ddot{\Psi} = M + (F_{x11}+F_{x12})L_1 \cdot \sin\alpha - (F_{y11}+F_{y12})L_1 + (F_{y21}+F_{y22})L_2 \cdot \cos\alpha = 0$$

et en supposant que le premier terme $(F_{x11}+F_{x12})L_1\sin\alpha$ soit négligeable devant les deux derniers termes de l'équation car $F_y$ augmente très vite avec $\alpha$, la compensation du moment de lacet se traduit par :

$$(E_7) \qquad -M = (F_{y11}-F_{y12})L_1 \cdot \cos\alpha - (F_{y21}+F_{y22})L_2$$

Il est intéressant d'admettre que les deux roues directrices tournent d'un même angle $\alpha$ et de négliger le roulis du véhicule pour se ramener à un modèle de véhicule dit deux roues, comme le montre le schéma de la figure 3, dans lequel la roue avant R$_1$, respectivement arrière R$_2$, est à une distance L$_1$, respectivement L$_2$, du centre de gravité G du véhicule, et subit une force latérale F$_{1y}$ égale à la somme des forces latérales F$_{y11}$ et F$_{y12}$ subies par les deux roues directrices du modèle réel, respectivement F$_{y2}$ = F$_{y21}$ + F$_{y22}$.

On peut admettre cette hypothèse si on considère que le véhicule a une symétrie de comportement droite gauche et une absence de roulis, surtout lors d'un freinage en ligne droite.

Si la masse du véhicule est référencée m, les dérives respectives au centre de gravité G référencée $\delta$, à l'avant référencée $\delta_1$ et à l'arrière référencée $\delta_2$ et la raideur de dérive des pneus d'un même train i référencée D$_i$, les équations suivantes en régime statico-dynamique correspondent :

- au bilan des forces selon l'axe horizontal Oy perpendiculaire à l'axe $\Delta$ du véhicule :

$$m \cdot \gamma_t = F_{1y} \cdot \cos\alpha + F_{2y}$$

- au comportement élastique du pneu équipant la roue R$_i$ :

$$F_{iy} = -D_i \cdot \delta_i$$

- au comportement cinématique de la roue directrice R$_1$ et de la roue arrière R$_2$ :

$$V \cdot \sin(\alpha+\delta_1) = V \cdot \sin\delta + L_1 \cdot \dot{\Psi}$$

$$V \cdot \sin\delta_2 = V \cdot \sin\delta + L_2 \cdot \dot{\Psi}$$

- à l'accélération transversale :

$$\gamma_t = V \cdot (\dot{\Psi} + \dot{\delta})$$

- à la compensation du moment de lacet perturbateur, dû au freinage par le système ABS permettant au véhicule de rester sur sa trajectoire par annulation de l'accélération de lacet $\ddot{\Psi}$, qui se traduit par l'équation (E$_8$) à partir de l'équation (E$_7$) :

$$-M = \left(F_{1y} \cdot \alpha \cdot \sin\alpha \cdot L_1\right) - \left(F_{2y} \cdot \alpha \cdot L_2\right)$$

En considérant que la dérive $\delta$ au centre de gravité G du véhicule est très inférieure à 1, alors : $\sin(\alpha+\delta) \approx \sin\alpha + \delta \cdot \cos\alpha$ et l'angle de correction $\alpha_{cor}$ de braquage des roues directrices est obtenu lors de l'étape e$_3$), à partir de l'équation (E$_9$) :

$$(E_9) \quad \alpha_{cor} = \arcsin\left[\frac{m\gamma_t\left(D_2 L_2 - D_1 L_1\right) - \dfrac{\dot{\Psi}}{V} D_1 D_2\left(L_2^2 - L_1^2\right) - \left(D_1 + D_2\right)M}{D_1 D_2\left(L_1 + L_2\right)}\right]$$

Cette étape e$_3$) de calcul de l'angle de correction utilise les mesures de l'accélération transversale $\gamma_t$, de la vitesse de lacet $\dot{\Psi}$, de la vitesse de roue $\omega_{ij}$ pour déterminer la vitesse V du véhicule, et l'estimation du moment de lacet perturbateur de l'étape e$_2$).

Plutôt que d'asservir le braquage des roues dans la position qui compense le moment de lacet perturbateur et ignorer la volonté du conducteur, l'invention propose une commande du moteur de la direction assistée électrique pour que le couple ressenti par le conducteur au niveau du volant et mesuré par un capteur de couple entre le volant et la colonne de direction, soit un couple de rappel vers l'angle de correction $\alpha_{cor}$. Pour cela, le procédé comporte une étape e$_4$) de calcul d'un couple de rappel au volant vers la position de correction de braquage définie à l'étape précédente. Le conducteur garde ainsi une relative liberté tout en étant incité à tourner le volant de façon à compenser le moment de lacet. Ce couple de rappel C$_{cons}$, que doit ressentir le conducteur, constitue une consigne de l'asservissement, qui est fonction de l'angle $\alpha_{cor}$ de correction et de l'angle volant mesuré $\alpha_v$, auquel on ajoute un terme $A \cdot \dot{\alpha}_v$ d'amortissement proportionnel à la vitesse de rotation $\dot{\alpha}_v$ du volant, A étant une constante, pour éviter les oscillations du volant autour de la position de consigne :

$$(E_{10}) \quad C_{cons} = k \cdot \left(C_{cor} - \alpha_v\right) - A \cdot \dot{\alpha}_v$$

L'invention consiste maintenant à asservir le couple appliqué par la colonne au volant autour de la consigne de rappel vers l'angle de correction de braquage. Ce couple C$_{mes}$ qui est ressenti par le conducteur au niveau du volant et qui est mesuré par un capteur, est composé des efforts qui remontent des roues dans la direction et du couple appliqué par la direction assistée électrique. Cet asservissement se fait par réglage de l'intensité du courant fournie au moteur électrique de la direction assistée. Dans ce système, la perturbation est le couple qui remonte dans la colonne.

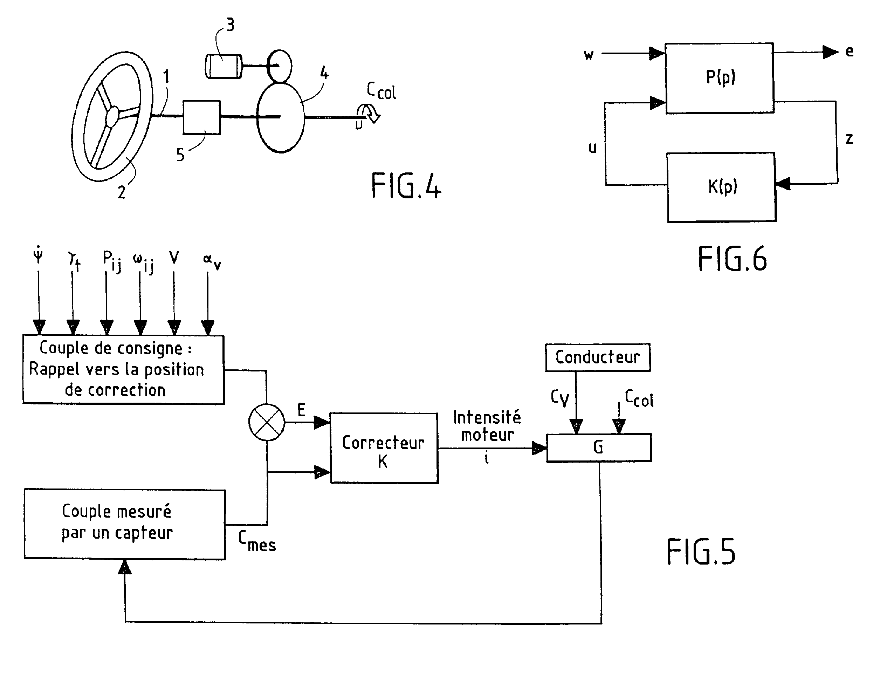

Comme le montre le schéma de la figure 4, la direction assistée est constituée d'une colonne de direction 1 reliant le volant 2 aux roues du véhicule et dont la rotation est facilitée par un moteur 3 pilotant un réducteur 4. Un capteur 5 de couple délivre la mesure du couple C$_{mes}$ existant dans le volant et la colonne. Si on considère le système G constitué du moteur de la direction assistée électrique, du volant, du capteur de couple et du réducteur et si on note :

N$_\theta$ : le rapport de réduction du réducteur
J$_v$ : l'inertie du volant
J$_M$ : l'inertie du moteur
k$_c$ : la raideur du capteur de couple

$\rho_r$ : le rendement du réducteur

$k_M$ : la constante de couple du moteur

$C_{red}$ : le couple du moteur sur le réducteur

$C_{col}$ : le couple remontant dans la colonne, et considéré comme une perturbation

$C_{mes}$ : le couple du volant sur le réducteur, qui est aussi le couple mesuré par le capteur de couple

$C_v$ : le couple appliqué par le conducteur sur le volant

$\alpha_{red}$ : l'angle de rotation du réducteur

$i$ : le courant traversant le moteur

$s$ : la variable de Laplace

la modélisation du réducteur se traduit par l'équation :

$$(E_{11}) \quad N_\theta \cdot \rho_r \cdot C_{red} + C_v + C_{mes} = 0$$

celle du volant se traduit par l'équation :

$$(E_{12}) \quad J_v \cdot \alpha_v \cdot s^2 = C_v + C_{mes}$$

celle du capteur de couple se traduit par l'équation :

$$(E_{13}) \quad -C_{mes} = k_c \left( \alpha_v - \alpha_{red} \right)$$

et la modélisation du moteur de la DAE se traduit par l'équation :

$$(E_{14}) \quad k_M \cdot i + C_{red} = J_M \cdot \theta_M \cdot s^2$$

avec $\theta_M$ : l'angle de rotation du moteur égal à $N_\theta \cdot \alpha_{red}$

En négligeant les frottements secs, les transferts entre l'intensité, le couple au volant, le couple remontant dans la colonne de direction et le couple mesuré par le capteur s'expriment par l'équation :

$$(E_{15}) \quad C_{mes} = \frac{C_{col} + a \cdot i + b \cdot C_v}{c + d \cdot s^2}$$

s étant la variable de Laplace et

a, b, c et d étant des coefficients dépendant des caractéristiques des éléments qui constituent la direction assistée électrique, c'est-à-dire de rapport de réduction du réducteur, l'inertie du volant et celle du moteur, entre autres.

Le système G ainsi modélisé est donc résonnant, car la raideur du capteur de couple introduit un mode de vibration qui provoque des oscillations. Pour le stabiliser, le procédé va calculer un courant de commande comprenant un terme d'amortissement $i_a$ proportionnel à la dérivée du couple mesuré :

$$i_a = -k_d \cdot \dot{C}_{mes}$$

Ainsi, le couple mesuré par le capteur s'écrit :

$$(E_{16}) \qquad C_{mes} = \frac{C_{col} + a' \cdot i + b' \cdot C_v}{c' + d' \cdot s + e' \cdot s^2}$$

les coefficients a' à e' dépendant des caractéristiques de la DAE.

Cette étape e$_5$) d'asservissement du couple C$_{mes}$ ainsi défini autour de la consigne de rappel est réalisée par un correcteur K à deux entrées, dont l'une est précisément le couple mesuré C$_{mes}$ par le capteur et l'autre est l'erreur E entre le couple et la valeur de consigne, et subissant deux perturbations, dont l'une est le couple C$_v$ appliqué par le conducteur sur le volant et l'autre est le couple C$_{col}$ remontant des roues, qui sont deux inconnues, comme le montre le schéma de la figure 5. Un exemple particulier, mais non limitatif, de correcteur est un correcteur par synthèse H∞. Pour un système P(p) donné, l'algorithme calcule le correcteur K(p) qui minimise la norme H infini du transfert entre les entrées w et les sorties e, comme le montre le schéma du principe de la synthèse H∞, sur la figure 6. Le système P(p) étant constitué des différents éléments de la direction assistée électrique, les entrées w sont :

- la consigne de couple pondérée C$_{cons}$
- le couple remontant de la colonne C$_{col}$ pondéré,
- le bruit provoqué par le capteur qui entraîne une perturbation sur la mesure du couple C$_{mes}$ ;

les sorties e sont :

- l'erreur pondérée entre la consigne de couple C$_{cons}$ et le couple mesuré C$_{mes}$,
- le courant de commande i du moteur, pondéré c'est-à-dire minimisé pour être le plus économique et le moins destructeur pour le moteur.

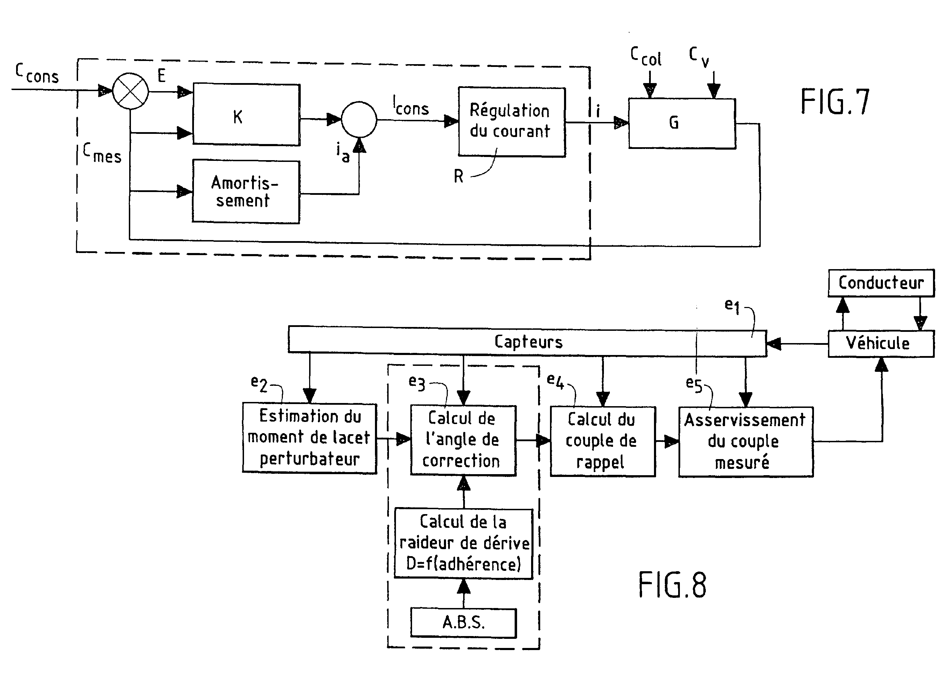

Le correcteur K reçoit en entrée z l'erreur E pondérée entre la consigne de couple C$_{cons}$ et le couple mesuré C$_{mes}$, pour délivrer en sortie la commande u, soit la consigne de courant i$_{cons}$ au moteur de la direction assistée électrique DAE, comme le montre le schéma de l'asservissement du moteur, sur la figure 7.

Cette consigne de courant i$_{cons}$ comprend un premier terme obtenu à partir du correcteur K (C$_{mes}$, C$_{cons}$) et un deuxième terme d'amortissement i$_a$ mentionné auparavant :

$$(E_{13}) \qquad i_{cons} = K\left(C_{mes}, C_{cons}\right) + i_a = K\left(C_{mes}, C_{cons}\right) - k_d \cdot \dot{C}_{mes}$$

Les pondérations, qui sont fonction de la fréquence des signaux, permettent d'orienter la minimisation du courant de commande du moteur en accord avec les objectifs d'économie et de préservation du moteur de la direction électrique assistée DAE.

Le courant effectif i du moteur électrique mesuré par un capteur de courant, est asservi autour de cette valeur de consigne par un régulateur R. Dans le cas d'un moteur à courant continu, l'asservissement peut être réalisé par exemple par un régulateur numérique de type « RST », où R, S et T sont des polynômes de la variable de Laplace, calculés hors ligne en fonction des caractéristiques du moteur électrique utilisé et du type de réponse souhaité aux consignes. D'autres types de moteur électrique peuvent être régulés autrement.

Selon une variante de l'invention, le calcul de l'angle de correction de braquage des roues tient compte de l'adhérence, comme le montre le schéma de la figure 8. En effet, l'angle de correction α$_{cor}$ dépend fortement de la valeur de la raideur de dérive D, comme cela apparaît dans l'équation (E$_9$). En tenant compte du report de charge longitudinal, on peut considérer que la raideur de dérive normalisée, c'est-à-dire divisée par l'effort normal F$_z$ à la route pour en supprimer l'influence, ne dépend alors que de l'adhérence. Pour cela, un coefficient inférieur à 1 et dépendant de l'adhérence est affecté à la raideur de dérive nominale. Une telle estimation de l'adhérence est réalisée par le système ABS monté sur le véhicule et peut ainsi être utilisée dans le calcul de l'angle de correction.

Le procédé d'assistance en freinage sur adhérence asymétrique selon l'invention, présente les avantages suivants. Puisque la direction assistée électrique du véhicule prend en charge la compensation du moment de lacet perturbateur, dû à la dissymétrie de l'adhérence, le freinage commandé par le système ABS peut être plus important sur le côté haute adhérence et la distance d'arrêt diminuée. Cependant, le conducteur du véhicule garde la liberté de le diriger selon la trajectoire souhaitée, mais il ressent un couple au niveau du volant, destiné à l'inciter à tourner le volant vers une position contrant le moment de lacet perturbateur.

La conduite du véhicule est facilitée car le système incite le conducteur à réagir dans le bon sens et peut même stabiliser le véhicule sans action du conducteur sur le volant. Pour augmenter le freinage sans réduire la stabilité du freinage, le procédé utilise des capteurs déjà montés sur les véhicules équipés d'une direction assistée électrique et d'un système de freinage avec ABS.

Selon une autre variante de l'invention, valable pour un déplacement en ligne droite du véhicule, pour lequel la vitesse de lacet $\psi$ et l'accélération transversale sont nulles, le calcul de l'angle de correction $\alpha_{cor}$ est simplifié à partir de l'équation précédente ($E_9$) et ne nécessite pas de capteurs pour ces deux informations.

**Revendications**

1. Procédé d'assistance d'un véhicule automobile lors d'un freinage sur adhérence asymétrique, le véhicule étant équipé d'une direction assistée électrique et d'un système de freinage avec anti-blocage des roues ABS, utilisant des capteurs de mesure de l'accélération latérale du véhicule, des quatre vitesses de roues, des quatre pressions de freinage, de la vitesse de lacet et de l'angle du volant, le système de freinage avec anti-blocage des roues commandant un freinage individuel optimisé sur chaque roue et différent sur les deux roues d'un même essieu et la direction assistée électrique compensant automatiquement le moment de lacet perturbateur créé par cette différence de pression de freinage ledit procédé étant **caractérisé par**, les étapes suivantes :

   - $e_1$) acquisition des mesures réalisées par des capteurs, puis traitées par filtrage pour éliminer le bruit ;
   - $e_2$) estimation du moment (M) de lacet perturbateur, créé par les forces longitudinales de freinage subies par les roues sur adhérence asymétrique, à partir des vitesses des roues ($\omega_{ij}$), des pressions de freinage ($P_{ij}$) et de l'angle du volant ($\alpha_v$) ;
   - $e_3$) calcul d'un angle de correction de braquage ($\alpha_{cor}$) pour créer un moment s'opposant au moment de lacet (M) estimé à l'étape précédente, par annulation de l'accélération de lacet ($\ddot{\psi}$) à partir des raideurs de dérive, de l'accélération transversale ($\gamma_t$), de la vitesse de lacet ($\dot{\psi}$) et de la vitesse du véhicule ($V$) ;
   - $e_4$) calcul d'un couple ($C_{cons}$) de consigne de rappel du volant vers la position de correction de braquage, à partir de cet angle calculé et de la mesure de l'angle au volant ;
   - $e_5$) asservissement du couple ($C_{mes}$) mesuré entre le volant et la colonne de direction vers le couple de consigne calculé précédemment, par commande en courant du moteur de la direction assistée électrique.

2. Procédé d'assistance d'un véhicule automobile selon la revendication 1, **caractérisé en ce que** le couple de consigne de rappel ($C_{cons}$), que doit ressentir le conducteur, est fonction de l'angle ($a_{cor}$) de correction et de l'angle volant mesuré ($\alpha_v$), auquel est ajouté un terme ($A \cdot \dot{\alpha}_v$) d'amortissement proportionnel à la vitesse de rotation ($\dot{\alpha}_r$) du volant, A étant une constante, pour éviter les oscillations du volant autour de la position de consigne :

$$C_{cons} = k \cdot \left( C_{cor} - \alpha_v \right) - A \cdot \dot{\alpha}_v$$

3. Procédé d'assistance d'un véhicule automobile selon la revendication 1, **caractérisé en ce que** le système à commander constitué du moteur de la direction assistée électrique, du volant, du capteur de couple et du réducteur étant résonnant, car la raideur du capteur de couple introduit un mode de vibration qui provoque des oscillations, le courant calculé pour la commande du moteur comprend un terme d'amortissement $i_a$ proportionnel à la dérivée du couple mesuré ($C_{mes}$) entre le volant et la colonne de direction :

$$i_a = -k_d \cdot \dot{C}_{mes}$$

4. Procédé d'assistance d'un véhicule automobile selon les revendications 1 et 3, **caractérisé en ce que** l'asservissement du couple ($C_{mes}$) mesuré autour de la consigne de couple ($C_{cons}$) de rappel est réalisé par un correcteur, qui reçoit en entrée l'erreur pondérée entre la consigne de couple ($C_{cons}$) et le couple mesuré ($C_{mes}$), pour délivrer en sortie la consigne de courant ($i_{cons}$) au moteur de la direction assistée électrique, cette consigne autour de laquelle est régulé le courant efficace du moteur D comprenant un premier terme terme obtenu à partir du correcteur K ($C_{mes}$, $C_{cons}$) et un deuxième terme d'amortissement $i_a$ mentionné auparavant :

$$i_{cons}=K\left(C_{mes},C_{cons}\right)+i_a=K\left(C_{mes},C_{cons}\right)-k_d\cdot\dot{C}_{mes}$$

**5.** Procédé d'assistance d'un véhicule automobile selon la revendication 4, **caractérisé en ce que**, le moteur électrique de la direction assistée étant du type à courant continu, l'asservissement du courant effectif du moteur électrique autour de la valeur de consigne ($i_{cons}$) est réalisé par un régulateur numérique du type « RST », où R, S et T sont des polynômes de la variable de Laplace, calculés hors ligne en fonction des caractéristiques du moteur électrique et du type de réponse souhaité aux consignes.

**6.** Procédé d'assistance d'un véhicule automobile selon la revendication 1, **caractérisé en ce que** le moment (M) de lacet perturbateur s'exprime, en négligeant l'inertie des roues par rapport aux efforts de freinage et en considérant que la force latérale subie par chaque roue de la part du sol est très inférieure à la force longitudinale en phase de freinage et que l'angle de braquage ($\alpha$) des roues est petit, par :

$$M=\frac{1}{2R}\left[l_2\left(C_{F21}-C_{F22}\right)+l_1\left(C_{F11}-C_{F12}\right)\cos\alpha\right]$$

$l_1$ et $l_2$ étant les longueurs respectives des essieux avant et arrière :

R étant le rayon de roulement de chaque roue ;
$C_{ij}$ étant le couple de freinage exercé par les plaquettes de frein sur le disque de la roue $R_{ij}$, s'exprimant en fonction des pressions de freinage.

**7.** Procédé d'assistance d'un véhicule automobile selon la revendication 1, **caractérisé en ce que**, pour que la vitesse de lacet ($\Psi$) reste constante pendant le freinage dans le but de maintenir constante la trajectoire du véhicule malgré le moment de lacet (M), l'angle de correction ($\alpha_{cor}$) de braquage des roues directrices s'exprime par :

$$\alpha_{cor}=\arcsin\left[\frac{m\gamma_t\left(D_2L_2-D_1L_1\right)-\dot{\Psi}\big/_V\,D_1D_2\left(L_2^2-L_1^2\right)-\left(D_1+D_2\right)M}{D_1D_2\left(L_1+L_2\right)}\right]$$

si la masse du véhicule est référencée m, les dérives respectives au centre de gravité (G) référencée ($\delta$), à l'avant référencée ($\delta_1$) et à l'arrière référencée ($\delta_2$) et la raideur de dérive des pneus d'un même train i référencée ($D_i$).

**8.** Procédé d'assistance d'un véhicule automobile selon la revendication 7, **caractérisé en ce que** le calcul de l'angle de correction de braquage est fonction de l'adhérence estimée par le système de freinage ABS.

**9.** Procédé d'assistance d'un véhicule automobile selon l'une des revendications 7 ou 8, **caractérisé en ce que**, dans une utilisation en ligne droite, le calcul de l'angle de correction de braquage ($\alpha_{cor}$) est obtenu en annulant la vitesse de lacet ($\psi$) et l'accélération transversale ($\gamma_t$) du véhicule.

**10.** Procédé d'assistance d'un véhicule automobile selon la revendication 4, **caractérisé en ce que** le correcteur réalisant l'asservissement du couple mesuré est de type H infini.

**Claims**

**1.** Drive assist method for a motor vehicle under split-mu braking in which the grip is asymmetric, the vehicle being fitted with electric power steering and with an antilock braking system ABS, using sensors that measure the lateral acceleration of the vehicle, the four wheel speeds, the four brake pressures, the yaw rate and the steering wheel angle, the antilock braking system commanding optimized individual braking at each wheel which is also different on the two wheels of one and the same axle and the electric power steering automatically compensating the destabilizing yaw moment created by this difference in brake pressure, the said method being **characterized by** the following steps:

- $e_1$) acquiring the measurements taken by the sensors then processed by filtering in order to eliminate the noise;
- $e_2$) estimating the destabilizing yaw moment (M) created by the longitudinal braking forces experienced by the wheels with asymmetric grip, from the speeds ($\omega_{ij}$) of the wheels, the brake pressures ($P_{ij}$) and the steering wheel angle ($\alpha_v$) ;
- $e_3$) calculating a steering correction angle ($\alpha_{cor}$) to create a moment that opposes the yaw moment (M) estimated in the previous step by cancelling the yaw acceleration ($\ddot{\Psi}$) on the basis of the cornering stiffnesses, the transverse acceleration ($\gamma_l$) the yaw rate ($\dot{\psi}$) and the speed of the vehicle (**V**)
- $e_4$ calculating a reference torque ($C_{cons}$) for returning the steering wheel to the steering correction position, from this calculated angle and from the steering wheel angle measurement;
- $e_5$) automatically forcing the torque ($C_{mes}$) measured between the steering wheel and the steering column towards the reference torque calculated beforehand by controlling the current of the electric power steering motor.

2. Drive assist method for a motor vehicle according to Claim 1, **characterized in that** the return reference torque ($C_{cons}$) that the driver needs to feel is a function of the correction angle ($\alpha_{cor}$) and of the measured steering wheel angle ($\alpha_v$), to which there is added a damping term ($A \cdot \dot{\alpha}_v$) proportional to the rate of rotation ($\dot{\alpha}_v$) the steering wheel, A being a constant to avoid the steering wheel oscillating about the reference position:

$$C_{cons} = k \cdot \left( C_{cor} - \alpha_v \right) - A \cdot \dot{\alpha}_v$$

3. Drive assist method for a motor vehicle according to Claim 1, **characterized in that** because the system to be controlled consisting of the electric power steering motor, of the steering wheel, of the torque sensor and of the reduction gear is a resonant system, because the stiffness of the torque sensor introduces a vibration mode that gives rise to fluctuations, the current calculated for controlling the motor comprises a damping term $i_a$ proportional to the derivative of the torque ($C_{mes}$) measured between the steering wheel and the steering column:

$$i_a = -k_d \cdot \dot{C}_{mes}$$

4. Drive assist method for a motor vehicle according to Claims 1 and 3, **characterized in that** the measured torque ($C_{mes}$) is automatically forced towards the return reference torque ($C_{cons}$) by a corrector which receives, as input, the weighted error between the reference torque ($C_{cons}$) and the measured torque ($C_{mes}$) to deliver at output the reference current ($i_{cons}$) for the electric power steering motor, this reference towards which the effective current of the motor D is regulated comprising a first term obtained from the corrector $K(C_{mes}, C_{cons})$ and a second damping term $i_a$ mentioned hereinabove:

$$i_{cons} = K \left( C_{mes}, C_{cons} \right) + i_a = K \left( C_{mes}, C_{cons} \right) - k_d \cdot \dot{C}_{mes}$$

5. Drive assist method for a motor vehicle according to Claim 4, **characterized in that**, with the power steering electric motor being of the DC type, the effective current of the electric motor is automatically forced towards the reference value ($i_{cons}$) by a digital regulator of the "RST" type, where R, S and T are polynomials of the Laplace variable calculated offline as a function of the characteristics of the electric motor and of the desired type of response to set references.

6. Drive assist method for a motor vehicle according Claim 1, **characterized in that** the destabilizing yaw moment (M) can be expressed, neglecting the inertia of the wheels in comparison with the braking forces and assuming that the lateral force experienced by each wheel from the ground is very much lower than the longitudinal force in the braking phase and that the steering angle ($\alpha$) of the wheels is small, in the form:

$$M = \frac{1}{2R}\left[l_2(C_{F21} - C_{F22}) + l_1(C_{F11} - C_{F12})\cos\alpha\right]$$

$l_1$ and $l_2$ being the respective lengths of the front and rear axles,
R being the rolling radius of each wheel;
$C_{ij}$ being the braking torque applied by the brake pads to the disc of the wheel $R_{ij}$, expressed as a function of the brake pressures.

7. Drive assist method for a motor vehicle according to Claim 1, **characterized in that**, for the yaw rate ($\dot{\psi}$) to remain constant during braking with a view to keeping the course followed by the vehicle constant in spite of the yaw moment (M), the correction angle ($\alpha_{cor}$) for the steering of the steered wheels can be expressed in the form:

$$\alpha_{cor} = \arcsin\left[\frac{m\gamma_t(D_2 L_2 - D_1 L_1) - \frac{\dot{\Psi}}{V}D_1 D_2(L_2^2 - L_1^2) - (D_1 + D_2)M}{D_1 D_2(L_1 + L_2)}\right]$$

if the mass of the vehicle is referenced m the respective deviations at the centre of gravity (G) referenced ($\delta$), at the front referenced ($\delta_1$) and at the rear referenced ($\delta_2$) and the cornering stiffness of the tyres of one and the same wheel set i referenced ($D_i$).

8. Drive assist method for a motor vehicle according to Claim 7, **characterized in that** the calculation of the steering correction angle is a function of the grip estimated by the ABS braking system.

9. Drive assist method for a motor vehicle according to either of Claims 7 and 8, **characterized in that**, when used in a straight line, the calculation of the steering correction angle ($\alpha_{cor}$) is obtained by cancelling the yaw rate ($\dot{\Psi}$) and the transverse acceleration ($\gamma_t$) of the vehicle.

10. Drive assist method for a motor vehicle according to Claim 4, **characterized in that** the corrector that automatically controls the measured torque is of the H-infinity type.

**Patentansprüche**

1. Verfahren zur Assistenz eines Kraftfahrzeugs bei einem Bremsen bei unsymmetrischem Kraftschluss, wobei das Fahrzeug mit einer elektrischen Servolenkung und mit einem Bremssystem mit Blockierschutz der Räder ABS ausgestattet ist, das Sensoren zur Messung der Seitenbeschleunigung des Fahrzeugs, der vier Radgeschwindigkeiten, der vier Bremsdrücke, der Giergeschwindigkeit und des Lenkradwinkels verwendet, wobei das Bremssystem mit Blockierschutz der Räder eine optimierte Einzelbremsung an jedem Rad und unterschiedlich an den beiden Rädern einer gleichen Achse steuert, und die elektrische Servolenkung automatisch das Störgiermoment kompensiert, das durch diesen Bremsdruckunterschied erzeugt wird, wobei das Verfahren durch die folgenden Schritte **gekennzeichnet** ist:

- e1) Erfassung der durch Sensoren durchgeführten und dann durch Filterung zum Entfernen des Rauschens verarbeiteten Messungen;
- e2) Schätzung des Störgiermoments (M), das durch die Längsbremskräfte erzeugt wird, die die Räder bei unsymmetrischem Kraftschluss erfahren, ausgehend von den Geschwindigkeiten der Räder ($\omega_{ij}$), den Bremsdrücken ($p_{ij}$) und dem Lenkradwinkel ($\alpha_v$);
- e3) Berechnung eines Radeinschlag-Korrekturwinkels ($\alpha_{cor}$) , um ein Moment zu erzeugen, das dem im vorhergehenden Schritt geschätzten Giermoment (M) entgegenwirkt, durch Aufhebung der Gierbeschleunigung ($\dot{\psi}$) ausgehend von den Driftsteifigkeiten, der Querbeschleunigung ($\gamma_t$), der Giergeschwindigkeit ($\dot{\psi}$) und der Geschwindigkeit des Fahrzeugs (V);
- e4) Berechnung eines Rückstellsollmoments ($C_{cons}$) des Lenkrads in die Radeinschlag-Korrekturstellung, ausgehend von diesem berechneten Winkel und der Messung des Lenkradwinkels;
- e5) Regelung des gemessenen Moments ($C_{mes}$) zwischen dem Lenkrad und der Lenksäule auf das vorher berechnete Sollmoment, durch Stromsteuerung des Motors der elektrischen Servolenkung.

2. Verfahren zur Assistenz eines Kraftfahrzeugs nach Anspruch 1, **dadurch gekennzeichnet, dass** das Rückstellsollmoment ($C_{cons}$), das der Fahrer fühlen soll, vom Korrekturwinkel ($\alpha_{cor}$) und vom gemessenen Lenkradwinkel ($\alpha_v$) abhängt, zu dem ein Dämpfungsterm (A. $\alpha_v$) proportional zur Drehgeschwindigkeit ($\alpha_v$) des Lenkrads hinzugefügt wird, wobei A eine Konstante ist, um die Pendelbewegungen des Lenkrads um die Sollstellung zu vermeiden:

$$C_{cons} = k.(C_{cor}-\alpha_v)-A.\dot{\alpha}_v$$

3. Verfahren zur Assistenz eines Kraftfahrzeugs nach Anspruch 1, **dadurch gekennzeichnet, dass**, da das aus dem Motor der elektrischen Servolenkung, dem Lenkrad, dem Drehmomentsensor und der Untersetzung bestehende, zu steuernde System resonant ist, da die Steifigkeit des Drehmomentsensors einen Schwingungsmodus einführt, der Pendelbewegungen erzeugt, der für die Steuerung des Motors berechnete Strom einen Dämpfungsterm $i_a$ enthält, der proportional zur Ableitung des gemessenen Drehmoments ($C_{mes}$) zwischen dem Lenkrad und der Lenksäule ist:

$$i_a = -k_d.\dot{C}_{mes}$$

4. Verfahren zur Assistenz eines Kraftfahrzeugs nach den Ansprüchen 1 und 3, **dadurch gekennzeichnet, dass** die Regelung des gemessenen Drehmoments ($C_{mes}$) um den Drehmomentsollwert ($C_{cons}$) herum von einem Korrekturglied durchgeführt wird, das am Eingang den gewichteten Fehler zwischen dem Drehmomentsollwert ($C_{cons}$) und dem gemessenen Drehmoment ($C_{mes}$) empfängt, um am Ausgang den Stromsollwert ($i_{cons}$) an den Motor der elektrischen Servolenkung zu liefern, wobei dieser Sollwert, um den herum der Effektivstrom des Motors D geregelt wird, einen ersten Term, der ausgehend vom Korrekturglied K ($C_{mes}$, $C_{cons}$) erhalten wird, und einen zweiten, oben erwähnten Dämpfungsterm $i_a$ enthält:

$$i_{cons}=K(C_{mes},C_{cons})+i_a=K(C_{mes},C_{cons})-k_d.\dot{C}_{mes}$$

5. Verfahren zur Assistenz eines Kraftfahrzeugs nach Anspruch 4, **dadurch gekennzeichnet, dass**, wenn der Elektromotor der Servolenkung ein Gleichstrommotor ist, die Regelung des Effektivstroms um den Sollwert ($i_{cons}$) herum von einem digitalen Regler des Typs "RST" durchgeführt wird, wobei R, S und T Polynome der Laplace-Variablen sind, die netzunabhängig in Abhängigkeit von den Merkmalen des Elektromotors und von der gewünschte Reaktionsart auf die Sollwerte berechnet werden.

6. Verfahren zur Assistenz eines Kraftfahrzeugs nach Anspruch 1, **dadurch gekennzeichnet, dass** das Störgiermoment (M) unter Vernachlässigung der Trägheit der Räder bezüglich der Bremskräfte und unter der Annahme, dass die von jedem Rad von Seiten des Bodens erfahrene Seitenkraft sehr viel geringer als die Längskraft in der Bremsphase und der Einschlagwinkel ($\alpha$) der Räder klein ist, ausgedrückt wird durch:

$$M=\frac{1}{2R}[l_2(C_{F21}-C_{F22})+l_1(C_{F11}-C_{F12})\cos\alpha]$$

wobei $l_1$ und $l_2$ die Längen der Vorder- bzw. Hinterachse sind;
R der Rollradius jedes Rads ist;
$C_{ij}$ das von den Bremsbelägen auf die Scheibe des Rads $R_{ij}$ ausgeübte Bremsmoment ist, ausgedrückt abhängig von den Bremsdrücken.

7. Verfahren zur Assistenz eines Kraftfahrzeugs nach Anspruch 1, **dadurch gekennzeichnet, dass**, damit die Giergeschwindigkeit ($\dot{\psi}$) während des Bremsens konstant bleibt, um die Fahrspur des Fahrzeugs trotz des Giermoments (M) konstant zu halten, der Radeinschlag-Korrekturwinkel ($\alpha_{cor}$) der angetriebenen Räder ausgedrückt wird durch:

$$\alpha_{cor} = \arcsin\left[\frac{m\gamma_1\left(D_2L_2 - D_1L_1\right) - \dfrac{\dot{\Psi}}{V}D_1D_2\left(L_2^2 - L_1^2\right) - \left(D_1 + D_2\right)M}{D_1D_2\left(L_1 + L_2\right)}\right]$$

wenn die Masse des Fahrzeugs mit m, die jeweiligen Driften im Schwerpunkt (G) mit ($\delta$), vorne mit ($\delta_1$) und hinten mit ($\delta_2$) , und die Driftsteifigkeit der Reifen einer gleichen Achse i mit ($D_i$) bezeichnet sind.

8. Verfahren zur Assistenz eines Kraftfahrzeugs nach Anspruch 7, **dadurch gekennzeichnet, dass** die Berechnung des Radeinschlag-Korrekturwinkels vom durch das Bremssystem ABS geschätzten Kraftschluss abhängt.

9. Verfahren zur Assistenz eines Kraftfahrzeugs nach einem der Ansprüche 7 oder 8, **dadurch gekennzeichnet, dass** bei einer Verwendung in gerader Linie die Berechnung des Radeinschlag-Korrekturwinkels ($\alpha_{cor}$) durch Aufheben der Giergeschwindigkeit ($\dot{\psi}$) und der Querbeschleunigung ($\gamma_t$) des Fahrzeugs erhalten wird.

10. Verfahren zur Assistenz eines Kraftfahrzeugs nach Anspruch 4, **dadurch gekennzeichnet, dass** das die Regelung des gemessenen Drehmoments durchführende Korrekturglied vom Typ H-unendlich ist.

FIG.1

FIG.2

FIG.3

Conducteur

Véhicule

Capteurs

$e_1$

$e_2$ Estimation du moment de lacet perturbateur

$e_3$ Calcul de l'angle de correction

$e_4$ Calcul du couple de rappel

$e_5$ Asservissement du couple mesuré

Faible adhérence

Forte adhérence

$R_{12}$ $F_{y12}$ $F_{x12}$ $R_{22}$ $F_{y22}$ $F_{x22}$

$l_1$ $F_{y11}$ $G$ $F_{y21}$ $l_2$

$\alpha$ $L_1$ $L_2$ $F_{x21}$

$R_{11}$ $F_{x11}$ $R_{21}$ M

$x$ $y$ $\otimes z$ $0$

$R_1$ $\alpha$ $L_1$ $L_2$ $R_2$ $F_{x2}$

$F_{y1}$ $F_{x1}$ $G$ $F_{y2}$

FIG.4

FIG.6

FIG.5

FIG.7

FIG.8

**RÉFÉRENCES CITÉES DANS LA DESCRIPTION**

**Documents brevets cités dans la description**

- US 5224766 A
- US 4998593 A
- DE 19751227